# EUROPEAN PATENT APPLICATION

(11) **EP 2 538 331 A1**
(43) Date of publication of application: **26.12.2012**
(21) Application number: 12004647.9
(22) Date of filing: 20.06.2012
(51) Int. Cl.: G06F 9/50, G06F 11/07

(54) **Method of reporting execution result for SACMO and related communication device**

(30) Priority: 20.06.2011 US 201161498626 P
(71) Applicant: HTC Corporation, Taoyuan County 330 (TW)
(72) Inventor: Tseng, Yin-Yeh, Taoyuan City Taoyuan County 330 (TW); Yu, Chun-Ta, Taoyuan City Taoyuan County 330 (TW)
(74) Representative: Emde, Eric

(57) **Abstract**

A method of reporting a result of execution of a workflow of a software and application control management object (SACMO) management object tree for a SACMO client in a service system is disclosed. The method comprises determining a node of the SACMO management object tree according to the result of the execution of the workflow; generating a message comprising an address of the node of the SACMO management object tree; and transmitting the message to a SACMO server of the service system, for reporting the result to the SACMO server.

## Description

### Cross Reference To Related Applications

This application claims the benefit of U.S. Provisional Application No. 61/498,626, filed on June 20, 2011 and entitled "Method of reporting execution result in Software and Application Control Management Object", the contents of which are incorporated herein in their entirety.

### Background of the Invention

### 1. Field of the Invention

The present invention relates to a method used in a service system and related communication device, and more particularly, to a method of reporting a result of execution of a workflow and related communication device.

### 2. Description of the Prior Art

Open Mobile Alliance (OMA) is founded to develop OMA specifications for mobile services to meet users' needs. Furthermore, the OMA specifications aim to facilitate providing of the mobile services which are interoperable across geographic areas (e.g. countries), operators, service providers, networks, operation systems and mobile devices. In detail, the mobile services conforming to the OMA specifications can be used by the users without being restricted to particular operators and service providers. The mobile services conforming to the OMA specifications are also bearer agnostic, i.e., the bearer that carries the mobile services can be a second generation (2G) mobile system such as Global System for Mobile Communications (GSM), Enhanced Data rates for GSM Evolution (EDGE) or General Packet Radio Service (GPRS), or a third generation (3G) and beyond mobile system such as Universal Mobile Telecommunications System (UMTS), Long Term Evolution (LTE) or LTE-Advanced (LTE-A). Further, the mobile services conforming to the OMA specifications can be executed on various operation systems such as Windows, Android or Linux operated on various mobile devices. Therefore, industries providing the mobile devices or the mobile.services supporting the OMA specifications can benefit from a largely growing market enabled by interoperability of the mobile services. Besides, the users use the mobile devices or the mobile services supporting the OMA specifications can also have a better experience due to the interoperability of the mobile services.

In OMA Device Management (DM) working group, Software and Application Control Management Object (SACMO) is proposed to reduce an amount of transmissions between a SACMO client and a SACMO server. The SACMO aims to enable remote operations for software and application control in the SACMO client. The SACMO will provide the SACMO client capabilities of processing management actions such as a workflow of software and applications utilizing existing management objects. The workflow comprises a sequence of steps, wherein each step can be an operation, a process, a command or other type of resource. Further, a management object tree defined according to the SACMO will be used for setting up parameters and operational functions necessary for executing the workflow conditionally without indications from the SACMO server. Therefore, after finishing a step, the SACMO client can determine a next step according to a condition. In other words, the SACMO server sends the management object tree to the SACMO client for setting up the workflow. Then, the SACMO client executes the workflow according to the management object tree until the workflow is completed or a failure occurs.

However, when the failure occurs, the SACMO client only notifies the SACMO server that the failure occurs but does not notify the SACMO server where the failure is. It is difficult for the SACMO server to handle (e.g., find, solve and/or record) the failure, since the SACMO client executes multiple steps in the workflow according to the SACMO. Thus, how to report location of the failure is a topic to be addressed.

### Summary of the Invention

The present invention therefore provides a method and related communication device for reporting a result of execution of a workflow to solve the abovementioned problem.

A method of reporting a result of execution of a workflow of a software and application control management object (SACMO) management object tree for a SACMO client in a service system is disclosed. The method comprises determining a node of the SACMO management object tree according to the result of the execution of the workflow; generating a message comprising an address of the node of the SACMO management object tree; and transmitting the message to a SACMO server of the service system, for reporting the result to the SACMO server.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a service system according to an example of the present invention.

Fig. 2 is a schematic diagram of a communication device according to an example of the present invention.

Fig. 3 is a flowchart of a process according to an example of the present invention.

Fig. 4 is a SACMO management object tree 40 according to an example of the present invention.

### Detailed Description

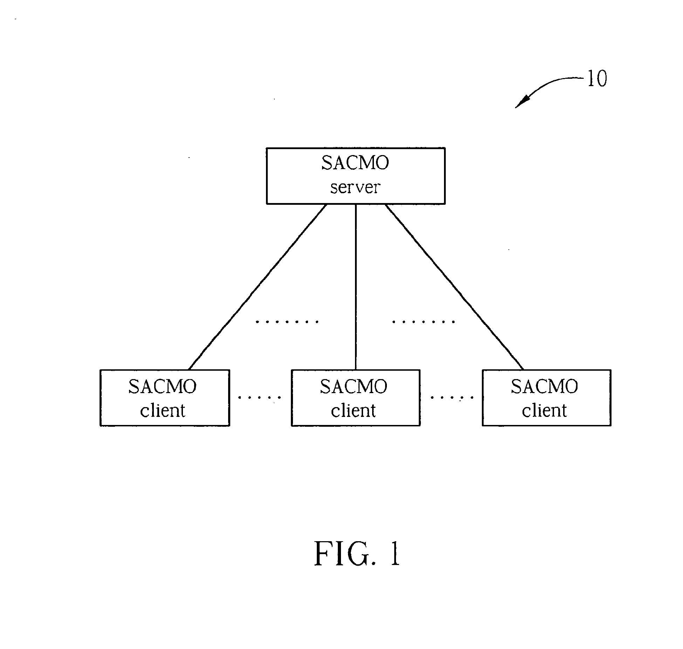

Please refer to Fig. 1, which is a schematic diagram of a service system 10 according to an example of the present invention. The service system 10 supports Software and Application Control Management Object (SACMO) developed by Open Mobile Alliance (OMA), and is briefly composed of a SACMO server and a plurality of SACMO clients supporting the SACMO.

In Fig. 1, the SACMO clients and the SACMO server are simply utilized for illustrating a structure of the service system 10. Practically, the SACMO clients can be inatalled in desktops and home electronics which are fixed at a certain position. Alternatively, the SACMO clients can be installed in mobile devices such as mobile phones, laptops, tablet computers, electronic books, and portable computer systems. The service system can be bearer agnostic, i.e., the bearer used for exchanging information (e.g., message, request, response, etc.) between the SACMO clients and the SACMO server can be a second generation (2G) mobile system such as Global System for Mobile Communications (GSM), Enhanced Data rates for GSM Evolution (EDGE) or General Packet Radio Service (GPRS), a third generation (3G) and beyond mobile system such as Universal Mobile Telecommunications System (UMTS), Long Term Evolution (LTE) or LTE-Advanced, or even a wireline communication system such as an Asymmetric Digital Subscriber Line (ADSL).

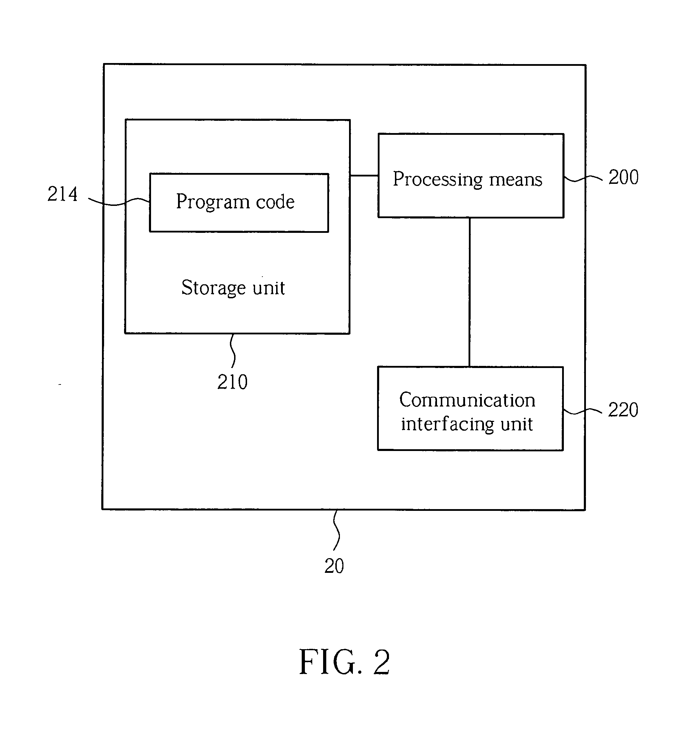

Please refer to Fig. 2, which is a schematic diagram of a communication device 20 according to an example of the present invention. The communication device 20 can be devices wherein a SACMO client or the SACMO server shown in Fig. 1 is installed. The communication device 20 may include a processing means 200 such as a microprocessor or an Application Specific Integrated Circuit (ASIC), a storage unit 210 and a communication interfacing unit 220. The storage unit 210 may be any (non-transitory) computer-readable storage medium that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver, and can transmit/receive information (e.g., message, request, response, etc.) according to processing results of the processing means 200.

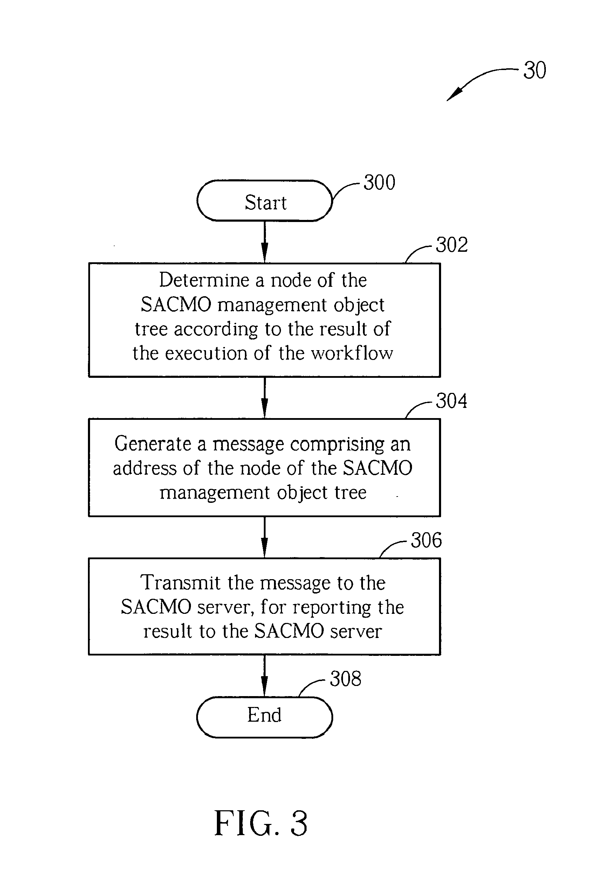

Please refer to Fig. 3, which is a flowchart of a process 30 according to an example of the present invention. The process 30 is utilized in a SACMO client shown in Fig. 1, for reporting a result of execution of a workflow of a SACMO management object tree to the SACMO server. The process 30 may be compiled into the program code 214 and includes the following steps:

Step 300: Start.

Step 302: Determine a node of the SACMO management object tree according to the result of the execution of the workflow.

Step 304: Generate a message comprising an address of the node of the SACMO management object tree.

Step 306: Transmit the message to the SACMO server, for reporting the result to the SACMO server.

Step 308: End.

According to the process 30, after the SACMO client executes the workflow, the SACMO client determines a node of the SACMO management object tree according to the result of the execution of the workflow. Then, the SACMO client generates a message comprising an address of the node of the SACMO management object tree, and transmits the message to the SACMO server, for reporting the result to the SACMO server. In other words, if the result of the execution indicates that the execution is unsuccessful (e.g., completed or interrupted with a failure), a node corresponding to the result is determined by the SACMO client. Then, an address of the node is included in the message as assistance information, to help the SACMO server to handle (e.g., find, solve and/or record) the result (i.e., erroneous result) and the failure.

Please note that, a spirit of the process 30 is that a SACMO client reports an address of a node according to a result of execution of a workflow, for reporting the result (e.g., a failure occurring during the execution), to help the SACMO server to handle the result (e.g., the failure). Realization of the process 30 is not limited. For example, the message mentioned above can be a generic alert if the workflow is executed asynchronously, and can be a status command if the workflow is executed synchronously.

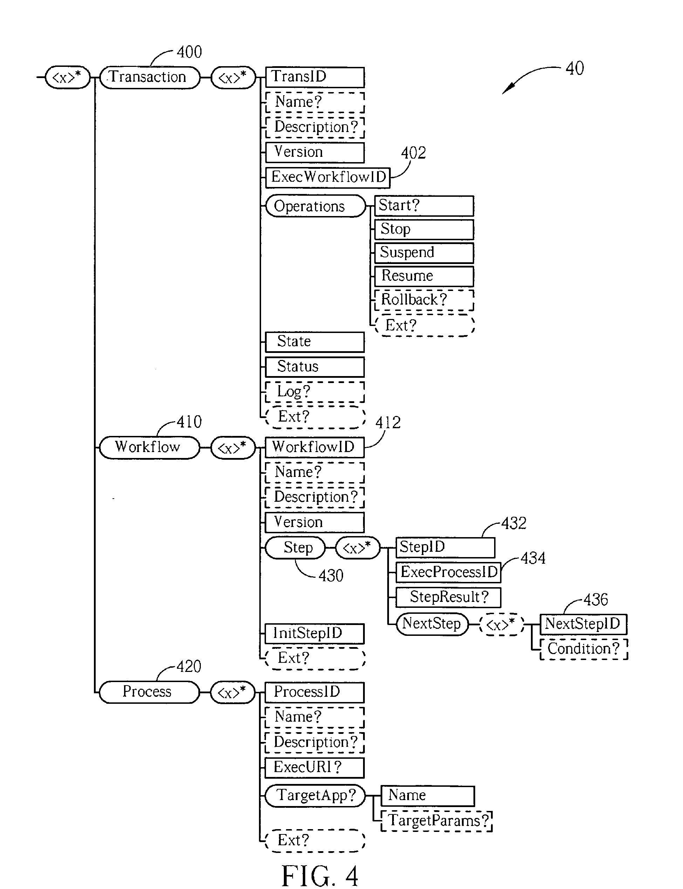

Besides, a method for determining a node according to the result is not limited. Please refer to Fig. 4, which is a SACMO management object tree 40 according to an example of the present invention. The SACMO management object tree 40 is stored in the SACMO client for executing a transaction 400 and a workflow 410 comprising a process 420, a step 430 and related nodes. For example, the SACMO client can determine that the node is a TransID node of a transaction (e.g., the transaction 400) of the SACMO management object, if the result indicates that execution of the transaction is successful, wherein the transaction (e.g., the transaction 400) is used to execute the workflow (e.g., the workflow 410). In other words, even if the transaction is executed successfully (e.g., without an error), the SACMO client can still include an address of the TransID node in the message. Then the SACMO Server can know which transaction is executed successfully. In another example, the SACMO client can determine that the node is a StepID node of a step of the workflow, if the result indicates that execution of the step of the workflow is not successful. For example, if a failure occurs when executing the step 430, the SACMO client can include an address of a StepID node 432 of the step 430 in the message. On the other hand, the node can point to one of the workflow 410, the process 420 and the step 430, if the result indicates that the one of the workflow 410, the process 420 and the step 430 does not exist. That is, if the node points to the workflow 410, the process 420 or the step 430 that is empty, the SACMO client includes the address of the node in the message. For example, an ExecWorkflowID 402 points to the workflow 410. If the workflow 410 does not exist, the SACMO client can include an address of the ExecWorkflowID 402 in the message. Alternatively, an ExecProcessID 434 points to the process 420. If the process 420 does not exist, the SACMO client can include an address of the ExecProcessID 434 in the message. Further, a NextStepID 436 points to a next step. If the next step does not exist, the SACMO client can include an address of the NextStepID 436 in the message. Preferably, an address mentioned above is comprised in a LocURI element which is included in a Target element of an Item element in the message.

Furthermore, the SACMO client can determine multiple nodes of the SACMO management object tree according to the result of the execution of the workflow. Then, addresses of the nodes are included in the message. For example, when multiple steps can not be executed successfully, i.e., failures occur when executing the steps, the SACMO client can include addresses of StepID nodes of the steps in the message. Alternatively, when multiple nodes (i.e., empty nodes) do not exist, the SACMO client can include addresses of nodes pointing to the empty nodes in the message. Further, it can be that some of the determined nodes are StepID nodes of steps at which failures occur, and the othersof the determined nodes are nodes pointing to empty nodes. Addresses of two kinds of the determined nodes are included in the message. Therefore, the SACMO client can report multiple nodes according to the above illustration. Preferably, LocURI elements in Target elements of multiple Item elements can be used for reporting multiple nodes in the message.

Those skilled in the art should readily make combinations, modifications and/or alterations on the abovementioned examples. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present invention provides a method for reporting a result of execution of a workflow. According to the present invention, a SACMO client reports an address of a node according to the result of the execution, for reporting the result (e.g., a failure occurring during the execution), to help the SACMO server to handle the result (e.g., the failure). Further, addresses of nodes can also be reported according to the present invention, after the nodes are determined by the SACMO client according to the result of the execution.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of reporting a result of execution of a workflow of a software and application control management object (SACMO) management object tree for a SACMO client in a service system, the method comprising:
determining a node of the SACMO management object tree according to the result of the execution of the workflow;
generating a message comprising an address of the node of the SACMO management object tree; and
transmitting the message to a SACMO server of the service system, for reporting the result to the SACMO server.

2. The method of claim 1, wherein the message is a generic alert if the workflow is executed asynchronously, and is a status command if the workflow is executed synchronously.

3. The method of claim 1, wherein the node is a StepID node of a step of the workflow, if the result indicates that execution of the step of the workflow is not successful.

4. The method of claim 1, wherein the node points to the workflow, a process of the SACMO management object tree or a step of the workflow, if the result indicates that the workflow, the process or the step does not exist.

5. The method of claim 1, wherein the node is a TransID node of a transaction of the SACMO management object tree, if execution of the transaction is successful, wherein the transaction is used to execute the workflow.

6. The method of claim 1, further comprising:
determining at least one node of the SACMO management object tree according to the result of the execution of the workflow; and arranging at least one address of the at least one node in the message.

7. The method of claim 1, wherein the address of the node is comprised in a LocURI element of a Target element of an Item element in the message.

8. A non-transitory computer-readable storage medium storing a program, when being executed by a processor, causes the processor to perform a method of reporting a result of execution of a workflow of a software and application control management object (SACMO) management object tree for a SACMO client in a service system, the method comprising:
determining a node of the SACMO management object tree according to the result of the execution of the workflow;
generating a message comprising an address of the node of the SACMO management object tree; and
transmitting the message to a SACMO server of the service system, for reporting the result to the SACMO server.

9. The non-transitory computer-readable storage medium of claim 8, wherein the message is a generic alert if the workflow is executed asynchronously, and is a status command if the workflow is executed synchronously.

10. The non-transitory computer-readable storage medium of claim 8, wherein the node is a StepID node of a step of the workflow, if the result indicates that execution of the step of the workflow is not successful.

11. The non-transitory computer-readable storage medium of claim 8, wherein the node points to the workflow, a process of the SACMO management object tree and a step of the workflow, if the result indicates that the workflow, the process or the step does not exist.

12. The non-transitory computer-readable storage medium of claim 8, wherein the node is a TransID node of a transaction of the SACMO management object tree, if execution of the transaction is successful, wherein the transaction is used to execute the workflow.

13. The non-transitory computer-readable storage medium of claim 8, wherein the method further comprises:
determining at least one node of the SACMO management object tree according to the result of the execution of the workflow; and
arranging at least one address of the at least one node in the message.

14. The non-transitory computer-readable storage medium of claim 8, wherein the address of the node is comprised in a LocURI element of a Target element of an Item element in the message.
